Europäisches Patentamt

European Patent Office

Office européen des brevets

(11) Veröffentlichungsnummer: **0 454 283 A2**

# (12) EUROPÄISCHE PATENTANMELDUNG

(21) Anmeldenummer: 91250111.1

(22) Anmeldetag: 24.04.91

(51) Int. Cl.⁵: **G03B 1/48**

(30) Priorität: 26.04.90 DE 4013909

(43) Veröffentlichungstag der Anmeldung:
**30.10.91 Patentblatt 91/44**

(84) Benannte Vertragsstaaten:
**AT CH DE FR GB IT LI**

(71) Anmelder: **ARNOLD & RICHTER CINE
TECHNIK GMBH & CO. BETRIEBS KG.
Türkenstrasse 89**

**W-8000 München 40(DE)**

(72) Erfinder: **Grosser, Claus, Ing.
Zeisigweg 14
W-8050 Freising(DE)**

(74) Vertreter: **Ninnemann, Detlef, Dipl.-Ing. et al
Patentanwälte Maikowski & Ninnemann
Xantener Strasse 10
W-1000 Berlin 15(DE)**

(54) **Bildfenster für Laufbildkameras.**

(57) Bildfenster für Laufbildkameras, an dem ein Laufbildfilm mittels eines Filmtransportmechanismus vorbeibewegt wird. Eine Einrichtung (30, 31, 32, 33) dient zur Aufnahme einer rahmenförmigen Bildformatmaske (4), deren Bildausschnitt (40) kleiner als der Bildfensterausschnitt (20) ist.

FIG. 2

Die Erfindung betrifft ein Bildfenster für Laufbildkameras, an dem ein Laufbildfilm mittels eines Filmtransportmechanismus vorbeibewegt wird.

In der optischen Achse einer Laufbildkamera ist in Lichteinfallrichtung hinter dem Kameraobjektiv und der Blende ein Bildfenster in einer Filmbahn angeordnet, an dem ein Laufbildfilm intermittierend vorbeibewegt und während der Öffnungszeiten der Blende belichtet wird. In Abhängigkeit vom Aufnahmeformat des Laufbildfilmes sind Bildfenster mit unterschiedlichem Bildfensterausschnitt erforderlich, so daß bei gleichem Filmformat unterschiedliche Belichtungsflächen des Laufbildfilmes freigegeben werden. Damit können mit einem Kameratyp, beispielsweise mit einer Laufbildkamera für 35mm-Bildformate unterschiedliche Aufnahmeformate realisiert werden.

Zur Änderung der Aufnahmeformate ist es jedoch erforderlich, die Bildfenster für die verschiedenen Aufnahmeformate auszutauschen, wozu nach dem Öffnen des Kameragehäuses ein Abklappen des Greiferblocks mit dem Filmtransportmechanismus die Bildfenster ausgetauscht werden.

Ein Problem besteht darin, daß selbst bei genauester Einhaltung der Abmessungen der unterschiedlichen Bildfenster für verschiedene Aufnahmeformate die Abstände sowie die Ausrichtung der Bildfenster in Bezug auf den Filmtransportmechanismus geringfügig variieren, so daß keine exakte Ausrichtung der Filmlaufbahn in Bezug auf den Filmtransportmechanismus gewährleistet ist.

Das gleiche trifft auch für einen Filmtransportmechanismus mit einem Sperrgreifer und Transportgreifer zu.

Schließlich besteht auch die Gefahr einer nicht exakten Anordnung des Bildfenster in der vorgegebenen optischen Ebene, so daß insbesondere bei häufigem Wechsel des Bildfensters für verschiedene Aufnahmeformate die Gefahr von Unschärfen bei der Belichtung des Laufbildfilmes besteht.

Aufgabe der vorliegenden Erfindung ist es, ein Bildfenster für eine Laufbildkamera zu schaffen, das einen Wechsel des Aufnahmeformats ohne Austausch des Bildfensters ermöglicht und gleichzeitig eine bei allen Aufnahmeformaten gleichbleibende Ausrichtung des Filmtransportmechanismus im Bezug auf das Bildfenster sowie stets gleichbleibende Filmlaufbedingungen auch bei unterschiedlichen Aufnahmeformaten sicherstellt sowie eine einwandfreie Bildqualität gewährleistet.

Diese Aufgabe wird durch das kennzeichnende Merkmal des Anspruchs 1 gelöst.

Die erfindungsgemäße Lösung ermöglicht den Einsatz unterschiedlicher Aufnahmeformate ohne Austausch des Bildfensters und damit ohne umständliche Handhabung mit der Gefahr der Beschädigung bzw. der Verschmutzung des Filmkanals. Damit verbunden ist eine stets gleichbleibende, exakte Ausrichtung des Filmtransportmechanismus in Bezug auf das Bildfenster bzw. stets gleiche Filmlaufbedingungen, da das unverändert bleibende Bildfenster stets gleiche Reibungsverhältnisse und eine gleichbleibende Ausrichtung auch bei unterschiedlichen Aufnahmeformate bietet, da die Bildformatmaske zurückversetzt ist und damit die Filmlaufbedingungen und die Reibungsverhältnisse nicht beeinflußt.

Gleichwohl kann natürlich das Bildfenster für Reinigungs- oder andere Zwecke ausgebaut werden. Zum Wechsel eines Aufnahmeformats ist jedoch lediglich der Austausch der Bildformatmaske erforderlich, ohne daß das Bildfenster aus dem Kameragehäuse entfernt werden muß.

Zusätzlich wird eine wesentliche Verbessung in Bezug auf die Reinhaltung des Bildausschnitts gewährleistet, da auf dem Film sich ablagernde oder vom Film transportierte Fremdkörper wie Fusseln oder dergleichen nicht an der Bildkante des Aufnahmeformats sondern an der Kante des tiefer als die Filmgleitfläche des Bildfensters liegenden Rahmens der Bildformatmaske haften bleiben, so daß sie keinen störenden Einfluß auf das Aufnahmeformat ausüben können.

Bei einem Austausch des Bildfensters bzw. bei festformatigen Bildfenstern tritt stets der unerwünschte Effekt auf, daß an der Bildkante hängenbleibende Fusseln bei der Belichtung des Films aufbelichtet werden und dadurch an der Unterkante des projizierten Films häufig sich bewegende Fusseln beobachtet werden können.

Dieser störende Effekt wird durch die erfindungsgemäße Lösung wirksam verhindert, da im eigentlichen Aufnahmeformat der Bildformatmaske keine Fusseln hängenbleiben sondern an der Kante des Bildfensters zur Aufnahme der Bildformatmaske.

Eine vorteilhafte Ausgestaltung der erfindungsgemäßen Lösung ist dadurch gekennzeichnet, daß die Einrichtung zur Aufnahme der Bildformatmaske aus einem an einer Seitenwand des Bildfensters angeordneten Schlitz und einem quer zur Filmlaufbahn verlaufenden oberen und unteren Führungskanal besteht, wobei eine parallel zur Filmlaufbahn angeordnete Aufnahmenut in der dem Schlitz gegenüberliegenden Seitenwand vorgesehen ist, so daß die Bildformatmaske in fester definierter Lage und Zuordnung zum Bildfenster angeordnet ist.

Eine vorteilhafte Weiterbildung der erfindungsgemäßen Lösung ist dadurch gekennzeichnet, daß die Bildformatmaske eine im montierten Zustand der Bildformatmaske seitlich aus dem Schlitz herausragende Grifflasche aufweist, an der eine an der Seitenwand des Bildfensters anliegende Anlageschulter angeordnet ist.

Die Anordnung einer seitlich aus dem Schlitz des Bildfensters herausragenden Grifflasche erleichtert zum einen die Bedienung beim Austausch der Bildformatmasken und gewährleistet zum anderen den Einsatz der jeweils gewünschten Bildformatmaske, da die Grifflasche gleichzeitig zur Beschriftung des Aufnahmeformats der Bildformatmaske dient.

Ein weiterer wesentlicher Vorteil der Grifflasche besteht darin, daß sie eine definierte Anlagekante beim Einsatz der Bildformatmaske in den Aufnahmeschnitts des Bildfensters gewährleistet.

Durch die Anordnung von Andruckfedern im oberen und/oder unteren Führungskanal des Bildfensters wird eine sichere Aufnahme der Bildformatmaske im Bildfenster gewährleistet, gleichzeitig aber ein leichtes Austauschen der Bildformatmaske bei einem Wechsel des Aufnahmeformats sichergestellt.

Eine weitere vorteilhafte Ausgestaltung der erfindungsgemäßen Lösung ist dadurch gekennzeichnet, daß an der Bildformatmaske ein rahmenförmiger Filterhalter zur Aufnahme eines Filters ansetz- oder ansteckbar ist. Vorzugsweise weist der Filterhalter eine Grifflasche auf, auf der eine Noppe angeordnet ist, die in eine Aussparung der Grifflasche der Bildformatmaske einfügbar ist.

Damit dient die Bildformatmaske gleichzeitig als Haltemedium zur Aufnahme unterschiedlicher Filter, so daß neben unterschiedlichen Aufnahmeformaten auch beliebige Filterelemente eingesetzt werden können, ohne daß ein umständliches Austauschen des Bildfensters erforderlich ist. Die Anordnung einer Aussparung und einer Rastnoppe gewährleistet eine definierte Zuordnung von Filterhalter und Bildformatmaske sowie ein vollständiges Ausfüllen des Aufnahmeformats durch den Filter.

In einer vorteilhaften Weiterbildung ist der Filterhalter auseinanderklappbar ausgebildet, wobei zwischen die beiden Hälften des Filterhalters der jeweilige Filter einsetzbar ist. Dies gewährleistet die Verwendung eines Filterhalters für unterschiedliche Filterelemente, so daß eine gleichzeitig kostengünstige Lösung geschaffen wird.

In einer vorteilhaften Ausgestaltung ist eine durchgehende Bohrung im Filterhalter vorgesehen, die bei eingesetztem Filter abgedeckt ist. In Verbindung mit einem im Kameragehäuse angeordneten Mikroschalter kann ein optisches Signal in den Kamerasucher eingeblendet werden, das den Benutzer der Kamera den Einsatz eines Filter signalisiert. Die durchgehende Bohrung im Filterhalter wird durch das Filterelement abgedeckt, so daß der Mikroschalter nicht weit genug in die Bohrung des Filterhalters eindringen kann und damit das optische Signal auslöst.

Anhand eines in der Zeichnung dargestellten Ausführungsbeispieles soll der der Erfindung zugrundeliegende Gedanke näher erläutert werden.

Es zeigen:

Fig. 1    eine schematische Darstellung der Anordnung des Bildfensters in einem Kameragehäuse;

Fig. 2    eine Explosionsdarstellung eines Bildfensters, einer Bildformatmaske, eines Filterhalters und eines Filters;

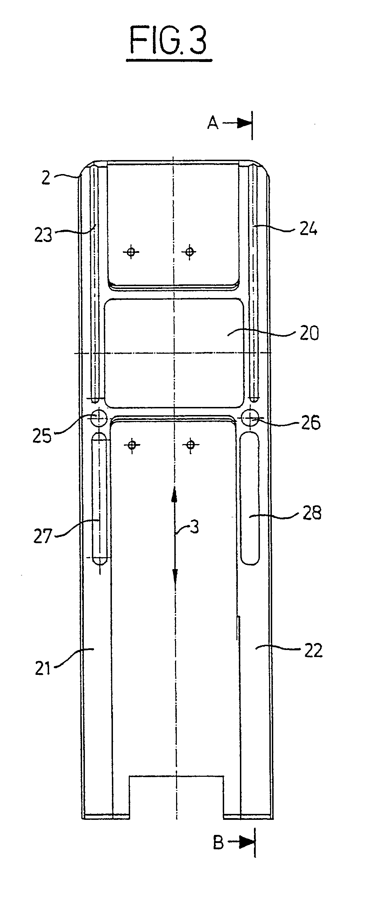

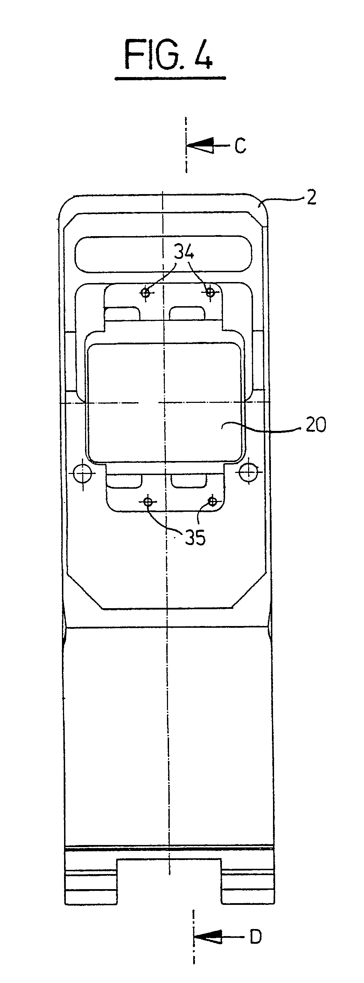

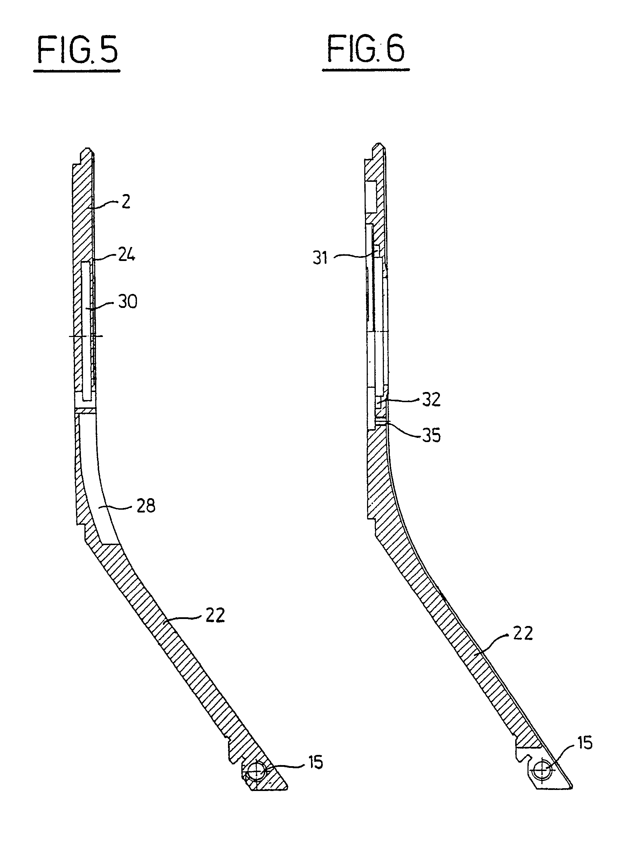

Fig. 3 - 6    eine Darstellung des Bildfensters mit Aufnahme für eine Bildformatmaske in unterschiedlichen Darstellungen und Schnitten;

Fig. 7 - 10    eine Darstellung einer Bildformatmaske in unterschiedlichen Ansichten und Schnitten;

Fig. 11    eine Draufsicht auf einen Filterhalter;

Fig. 12    einen Längsschnitt durch den Filterhalter gemäß Fig. 11;

Fig. 13/14    einen Längsschnitt durch und eine Draufsicht auf ein Federelement.

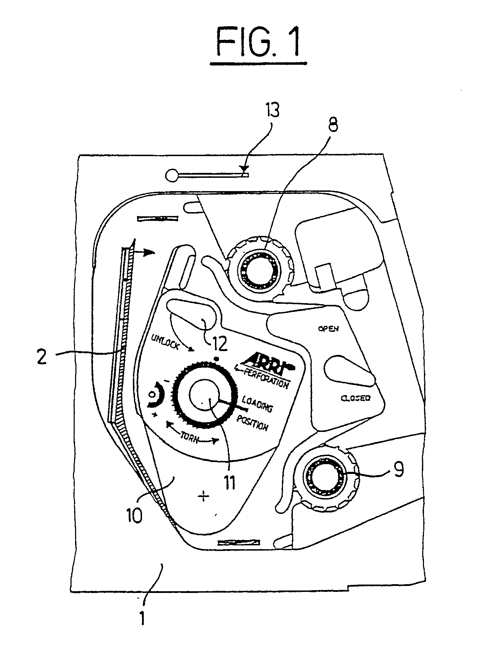

Die in Fig. 1 dargestellte Anordnung eines Bildfensters 2 in einem Kameragehäuse 1 zeigt die Zuordnung des Bildfensters 2 zum Filmtransportmechanismus, der aus einem Greiferblock 10 besteht, der schwenkbar im Kameragehäuse 1 angeordnet ist. Zwei Filmtransportzahnräder 8, 9 dienen zum kontinuierlichen Transport eines Laufbildfilmes aus einer Kamerakassette, wobei zwischen den Filmtransportzahnrädern 8, 9 und dem Greifermechanismus des Greiferblocks Filmschlaufen gebildet werden, die den intermittierenden Betrieb des Filmtransportmechanismus gegenüber dem kontinuierlichen Transport der Filmtransportzahnrädern 8, 9 ausgleichen.

Ein Rändelrad 11 sowie Hebel 12, 13 dienen zum Lösen des Greiferblocks, so daß dieser zum Auswechseln des Bildfensters 2 verschenkt werden kann. Damit ist ein Ausbau des Bildfensters 2 auch bei Einsatz der erfindungsgemäßen Lösung unter Einbeziehung einer Bildformatmaske für unterschiedliche Aufnahmeformate grundsätzlich möglich.

Zu diesem Zweck wird das Rändelrad 11 soweit gedreht, daß sich eine auf ihm angebrachte Markierung mit einer Markierung am Greiferblock 10 deckt. Durch Drücken des Hebels 12 kann der Greiferblock 10 nach hinten geschwenkt werden und anschließend können durch erneutes Verdrehen des Rändelrades 11 die Greiferspitzen im Greiferblock 10 zur Vermeidung von Beschädigungen soweit wie möglich in die Filmbahn zurückgezogen werden. Durch Ziehen des Hebels 13 kann das Bildfenster in die in Fig. 1 dargestellte Pfeilrichtung abgeklappt und unter leichtem Druck nach oben aus der Halterung gezogen werden.

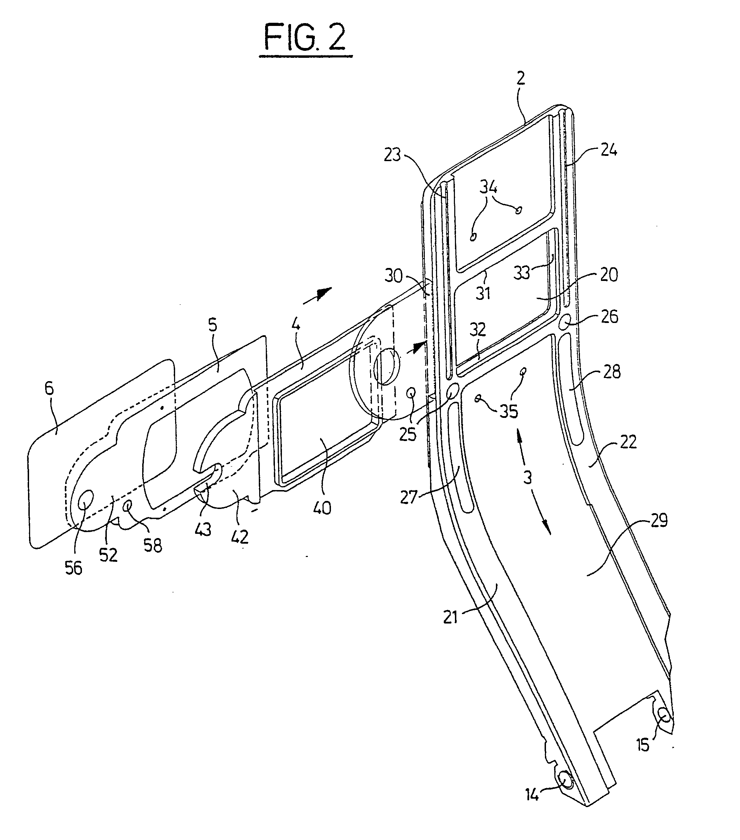

Beim Einsetzen des Bildfensters 2 in das Kameragehäuse ist lediglich darauf zu achten, daß die am unteren Ende des Bildfensters 2 angeordneten gefederten Kugeln 14, 15 gemäß Fig. 2 exakt in Bohrungen am Kameragehäuse 1 einrasten.

Gemäß Fig. 2 weist das in dieser Ausführungsform gebogene Bildfenster 2 zwei seitliche Filmführungskufen 21, 22 auf, auf denen der Rand des Laufbildfilmes mit den Filmperforationen entlanggleitet. Ein Bildausschnitt 20 des Bildfensters 2 befindet sich in der optischen Achse der Kamera und wird intermittierend durch Öffnen und Schließen einer Irisblende bzw. durch eine rotierende Umlaufblende freigegeben, so daß der in der Filmlaufbahn 3 intermittierend transportierte Laufbildfilm im Bereich des Bildausschnitts 20 belichtet wird.

Der zum Filmtransport vorgesehene Greifermechanismus weist Transportgreifer sowie Sperrgreifer auf, die in die Filmperforation eingreifen bzw. in sie für einen definierten Bildstand eintauchen. Für die Transportgreiferspitzen sind zwei Nuten 27, 28 in der Filmlauffläche, während unterhalb des Bildausschnittes zwei Bohrungen 25, 26 angeordnet sind, in die die Sperrgreiferspitzen eintauchen können.

Zusätzlich sind im Bereich des Bildausschnitts 20 des Bildfensters 2 zwei weitere Nuten 23, 24 vorgesehen, welche das Gleitverhalten des Laufbildfilm günstiger gestaltet. Der Bildbereich des Laufbildfilmes kommt mit der Filmlauffläche 29 des Bildfensters 2 nicht in Berührung, da diese gegenüber den seitlichen Filmführungen 21, 22 vertieft angeordnet ist.

Erfindungsgemäß ist in einer Seitenwand des Bildfensters 2 im Bereich des Bildausschnitts 20 ein Schlitz 30 vorgesehen sowie ein oberer und unterer Führungskanal 31, 32 und ein seitlicher Führungskanal 33 an der dem Schlitz 30 gegenüberliegenden Seitenwand des Bildfensters 2 angeordnet. Die Führungskanäle 31, 32, 33 und der Aufnahmeschlitz 30 dienen zur Aufnahme einer Bildformatmaske 4, die einen unsymmetrischen Querschnitt ausweist, so daß sie gegen ein seitenverkehrtes Einsetzen in die aus dem Schlitz 30 und den Führungskanälen 31, 32, 33 gebildete Aufnahme des Bildfensters 2 gesichert ist.

Die Bildformatmaske 4 weist einen Bildausschnitt 40 auf, der das Aufnahmeformat der Filmbilder bestimmt. Es können somit Bildformatmasken 4 mit unterschiedlichsten Aufnahmeformaten bei einem vorgegebenen Kameratyp und unter Einbeziehung eines gleichbleibenden Bildfensters 2 eingesetzt werden. Durch die vertiefte Anordnung der Bildformatmaske 4 in der Aufnahme des Bildfensters 2 wird sichergestellt, daß die Reibungsverhältnisse im Filmkanal, d.h. auf der Oberfläche des Bildfensters 2 konstant bleiben, so daß bei unterschiedlichen Aufnahmeformaten stets die gleichen Bedingungen beim Filmtransport herrschen.

Wie insbesondere die schematisch-perspektivische Darstellung gemäß Fig. 2 zeigt, werden beim Filmtransport auf der Oberfläche des Films transportierte Fremdkörper wie Fusseln so bewegt, daß sie stets an der Kante des Bildausschnitts 20 des Bildfensters 2 hängenbleiben, da die Bildformatmaske 4 gegenüber der Lauffläche des Bildfensters 2 zurückgesetzt ist.

Die Bildformatmaske 4 weist eine Grifflasche 42 auf, die zum einen der erleichterten Bedienung der Bildformatmaske zum Einsetzen und Herausnehmen aus der Aufnahme des Bildfensters 2 dient und zum anderen eine Beschriftung des jeweiligen Aufnahmeformats trägt. Die Grifflasche 42 ist in Deckung mit einer Grifflasche 52 des Filterhalters 5 bringbar, der eine Rastnoppe 56 aufweist, die in eine entsprechende Ausnehmung 43 der Bildformatmaske 4 einfügbar ist, so daß eine formschlüssige Verbindung zwischen Bildformatmaske 4 und Filterhalter 5 gewährleistet ist.

Der Filterhalter 5 besteht aus zwei miteinander verbundenen Hälften, von denen eine Hälfte gestrichelt dargestellt ist. Durch Auseinanderklappen des Filterhalters 5 kann ein Filter 6 in den Filterhalter 5 eingesetzt werden. Bei ein-gesetztem Filter 6 deckt dieser eine im Filterhalter 5 vorgesehene durchgehende Bohrung 58 ab, so daß ein im Kameragehäuse im Bereich des Bildfensters 2 angeordneter Mikroschalter bei eingesetzter Bildformatmaske 4 und Filterhalter 5 mit Filter 6 nicht in die Bohrung 58 eintauchen kann und somit bei nicht völlig ausgefahrenem Mikroschalterstift ein optisches Signal auslöst, das insbesondere in den Kamerasucher eingeblendet und im LCD-Display angezeigt werden kann und damit dem Benutzer anzeigt, daß ein Filter eingesetzt ist.

Zum Austausch der Bildformatmasken wird der Greiferblock 10 gemäß Fig. 1 durch Drücken des Hebels 12 nach hinten geschwenkt nachdem ggf. zuvor die Filmkassette abgenommen wurde. Daran anschließend wird der Hebel 13 gezogen und das Bildfenster in der in Fig. 1 dargestellten Pfeilrichtung angeklappt. Daran anschließend wird der Filterhalter 5 gemäß Fig. 2 seitlich aus dem Bildfenster 2 herausgezogen und daran anschließend die Bildformatmaske an der Grifflasche 42 leicht in Richtung der Objektivaufnahme der Kamera gedrückt und ebenfalls seitlich herausgezogen. Eine neue Bildformatmaske wird in umgekehrter Reihenfolge wieder eingesetzt.

Nähere Einzelheiten des Bildfensters mit der Aufnahme für die Bildformatmaske, des Filterhalters und der Einrichtung zur Befestigung der Bildformatmaske in der Aufname des Bildfensters werden anhand der nachfolgend beschriebenen Figuren erläutert.

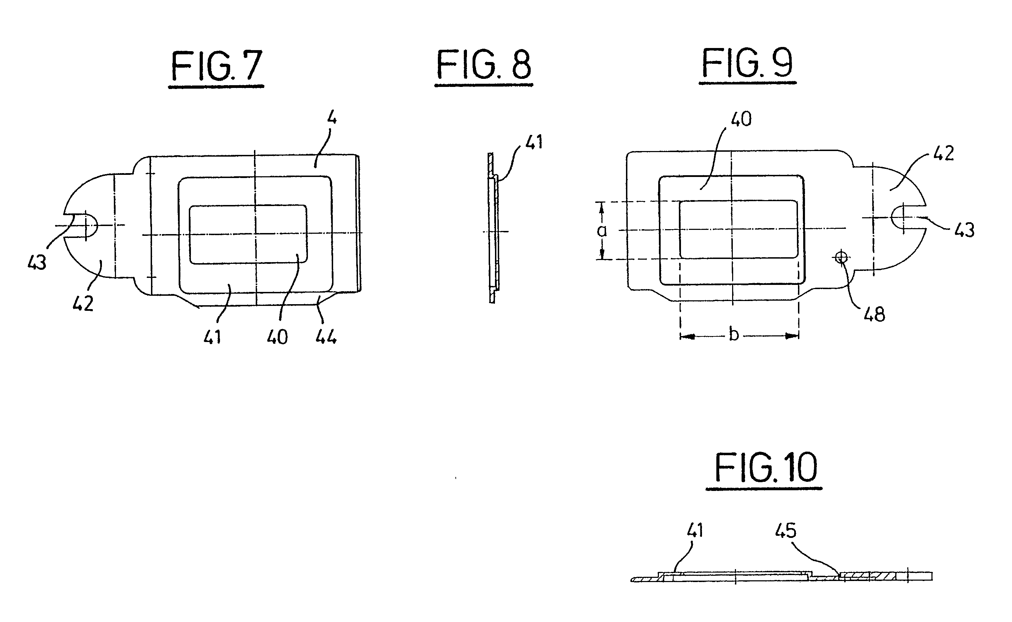

In den Fig. 7 und 9 ist eine Vorder- sowie Rückseitenansicht der Bildformatmaske 4 dargestellt. Die Bildformatmaske 4 weist einen Bildausschnitt 40 auf, dessen Größe in Abhängigkeit vom gewünschten Aufnahmeformat bemessen ist. Jede Bildformatmaske 4 weist einen ihr zugeordneten Bildausschnitt auf, so daß für einen Kameratpy unterschiedliche Bildformatmasken entsprechend den gewünschten Bildformaten eingesetzt werden.

Das jeweilige Aufnahmeformat wird durch die Seitenabmessungen a und b des Bildausschnitts 40 gemäß Figur 9 bestimmt. Das Bildseitenverhältnis des Wiedergabeformats leitet sich dementsprechend ab und ergibt zum Beispiel bei einem Aufnahmeformat von a = 18,6 mm und b = 22 mm ein Bildseitenverhältnis von 1 : 2,35 für Cinemascope-Formate oder bei einem Aufnahmeformat von a = 11,9 mm und b = 22 mm ein Bildseitenverhältnis von 1 : 1,85 für Breitwand-Formate. Weitere Formate sind das Normalformat (ACAD.), Silent Universal, Breitwand 1 : 1,66, Silent sowie Super 35 (1 : 2,35) bzw. Super 35 (1 : 1,85) bei einer 35 mm - Kamera usw.

Der Bildausschnitt 40 wird von einem Rahmen 41 umgeben, der entsprechend dem Querschnitt gemäß Fig. 8 erhaben gegenüber der Grundfläche der Bildformatmaske 4 ist, so daß in Verbindung mit der Aufnahme des Bildfenster eine exakte Zuordnung zwischen Bildformatmaske 4 und Aufnahme bzw. Bildfenster 2 gewährleistet ist und damit eine seitenverkehrte Einfügung der Bildformatmaske 4 des Bildfensters ausgeschlossen werden kann.

Eine vorspringende Seitenfläche 44 der Bildformatmaske 4 dient der Erleichterung der Einfügung der Bildformatmaske 4 in die Aufnahme des Bildfensters 2, in die sie gegen den Druck einer Feder eingefügt werden kann.

Die Grifflasche 42 der Bildformatmaske 4 dient zum einen der erleichterten Handhabung der Bildformatmaske 4 beim Einfügen und Herausnehmen aus der Aufnahme des Bildfensters 2 und zum anderen der Beschriftung zur Angabe des Bildausschnitts der betreffenden Bildformatmaske 4. Die Ausnehmung 43 am Ende der Grifflasche 42 dient zur Verbindung mit einer entsprechenden Noppe des nachstehend dargestellten und erläuterten Filterhalters.

Eine Anschlagkante 45 gemäß Fig. 10 dient zur definierten Anlage der Bildformatmaske 4 an den Schlitz 30 des Bildfensters 2, so daß eine exakte Ausrichtung der Bildformatmaske 4 in Bezug auf die optische Achse gewährleistet ist.

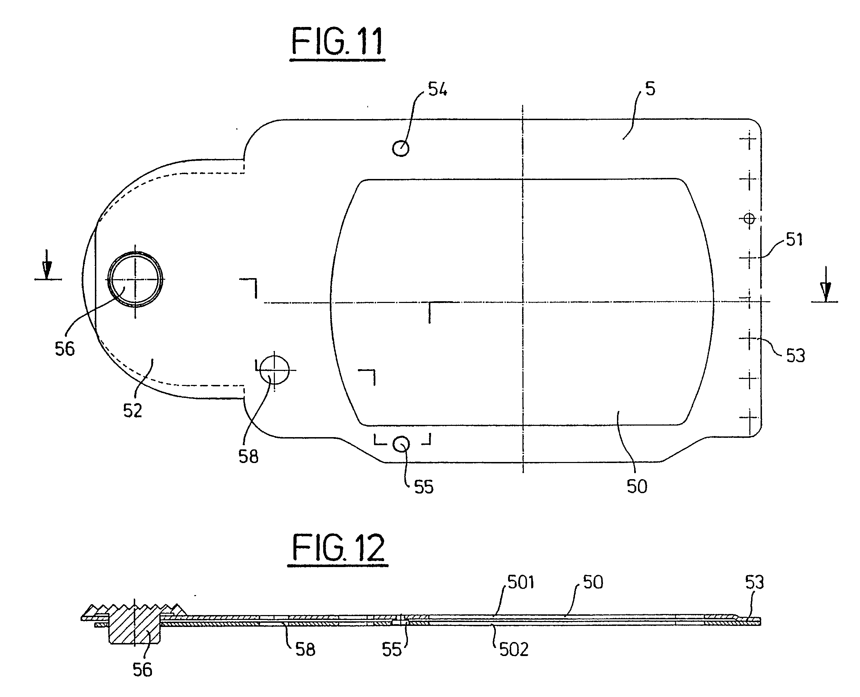

In Fig. 11 ist eine Draufsicht auf den Filterhalter und in Fig. 12 ein Längsschnitt durch den Filterhalter gemäß Fig. 11 dargestellt.

Der Filterhalter 5 besteht aus zwei rahmenförmigen Plättchen 501, 502, die an der Stirnseite 51 des Filterhalters 5 mittels Punktschweißungen 53 miteinanderverbunden sind. An der Seite der Grifflasche 52 des Filterhalters 5 kann dieser auseinandergeklappt werden, so daß ein Filter in den Filterhalter 5 eingefügt werden kann. Zwei seitlich angeordnete Nietverbindungen 54, 55 dienen zur formschlüssigen Verbindung der beiden Plättchen 501, 502 bei eingesetztem oder nicht eingesetztem Filter. Eine Noppe 56 dient zur Einfügung in die Ausnehmung 43 der Bildformatmaske 4.

Eine durchgehende Bohrung 58 ist bei eingesetztem Filterhalter an der Stelle eines Mikroschalters angeordnet, so daß dieser bei eingesetztem Filter nur eine begrenzte Wegstrecke in die durchgehende Bohrung 58 eindringen kann, bei nicht vorhandenem Filter aber durchgehend in die Bohrung 58 eindringen kann, so daß in Abhängigkeit vom Einsatz eines Filters in den Filterhalter 5 eine Anzeige beispielsweise im Sucher der zugeordneten Kamera eingeblendet und im LCD-Display angezeigt werden kann, die den Benutzer den Einsatz eines Filters oder einen filterlosen Einsatz signalisiert.

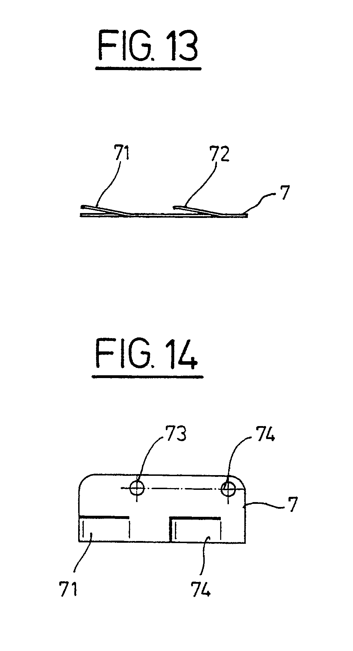

In Fig. 13 und 14 ist in der Seitenansicht und in der Draufsicht ein Federelement dargestellt, das in das Bildfenster 2 gemäß Fig. 2 oberhalb und unterhalb des Bildausschnitts 20 eingesetzt und an den Gewindebohrungen 34, 35 gemäß Fig. 2 mittels der Bohrungen 73, 74 befestigt werden kann.

Das Federelement 7 weist zwei abstehende Blattfedern 71, 72 auf, gegen die die Seitenkanten der Bildformatmaske 4 beim Einfügen in die Aufnahem 30, 31, 32, 33 des Bildfensters 2 drücken und somit eine kraftschlüssige Befestigung der Bildformatmaske in der Aufnahme des Bildfensters 2 bewirken. Das Federelement 7 kann einseitig im Bereich eines Einführungskanals 31 bzw. 32 der Aufnahme des Bildfensters oder beidseitig eingesetzt werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Bildfenster für Laufbildkameras, an dem ein Laufbildfilm mittels eines Filmtransportmechanismus vorbeibewegt wird,

   **gekennzeichnet durch**

   eine Einrichtung (30, 31, 32, 33) zur Aufnahme einer rahmenförmigen Bildformatmaske (4), deren Bildausschnitt (40) kleiner als der Bildfensterausschnitt (20) ist und deren Rahmen (41) gegenüber der Filmgleitfläche des Bildfensters (2) vertieft angeordnet ist.

2. Bildfenster nach Anspruch 1, **dadurch gekennzeichnet**, daß die Einrichtung (30, 31, 32, 33) zur Aufnahme der Bildformatmaske (4) aus einem an einer Seitenwand des Bildfensters (2) angeordneten Schlitz (30) und einem quer zur Filmlaufbahn (3) verlaufenden oberen und unteren Führungskanal (31, 32) besteht und daß eine parallel zur Filmlaufbahn (3) angeordnete Aufnahmenut (33) in der dem Schlitz (30) gegenüberliegenden Seitenwand vorgesehen ist.

3. Bildfenster nach Anspruch 1 oder 2, daß die Bildformatmaske (4) eine im montierten Zustand der Bildformatmaske (4) seitlich aus dem Schlitz (30) herausragende Grifflasche (42) aufweist, an der eine an der Seitenwand des Bildfensters (2) anliegende Anlageschulter (45) angeordnet ist.

4. Bildfenster nach Anspruch 3, **dadurch gekennzeichnet**, daß die Grifflasche (42) in einer Vertiefung des Kameragehäuses angeordnet ist.

5. Bildfenster nach einem der vorangehenden Ansprüche, **dadurch gekennzeichnet**, daß die Bildformatmaske (4) einen unsymmetrischen Querschnitt aufweist und daß die Aufnahme des Bildfensters (2) eine Kanalführung aufweist, die dem unsymmetrischen Querschnitt der Bildformatmaske (4) angepaßt ist.

6. Bildfenster nach einem der vorangehenden Ansprüche, **dadurch gekennzeichnet**, daß im oberen und/oder unteren Führungskanal (31 bzw. 32) eine Andruckfeder (7) angeordnet ist.

7. Bildfenster nach einem der vorangehenden Ansprüche, **dadurch gekennzeichnet,** daß an der Bildformatmaske (4) ein rahmenförmiger Filterhalter (5) zur Aufnahme eines Filters (6) ansetzbar oder ansteckbar ist.

8. Bildfenster nach Anspruch 7, **dadurch gekennzeichnet**, daß der Filterhalter (5) mit einer Grifflasche (52) versehen ist, auf der eine Noppe (56) angeordnet ist, die in eine Aussparung (43) der Grifflasche (42) der Bildformatmaske (4) einfügbar ist.

9. Bildfenster nach Anspruch 8, **dadurch gekennzeichnet**, daß der Filterhalter (5) auseinanderklappbar ist und daß zwischen die beiden Hälften (501, 502) des Filterhalters (5) der Filter (6) einsetzbar ist.

10. Bildfenster nach einem der vorangehenden Ansprüche 7 bis 9, **dadurch gekennzeichnet,** daß der Filterhalter (5) eine durchgehende Bohrung (58) aufweist, die bei eingesetztem Filter (6) abgedeckt ist.

# FIG. 1

# FIG. 2

# FIG.3

# FIG. 4

## FIG.5

## FIG.6

# FIG.7

4

43

42

41  40  44

# FIG. 8

41

# FIG.9

40

42

43

a

b

48

# FIG.10

41  45

EP 0 454 283 A2

**FIG.11**

**FIG.12**

EP 0 454 283 A2

## FIG. 13

## FIG. 14

14